# EUROPÄISCHE PATENTANMELDUNG

(11) **EP 3 943 259 A2**
(43) Veröffentlichungstag der Anmeldung: **26.01.2022**
(21) Anmeldenummer: 21180854.8
(22) Anmeldetag: 22.06.2021
(51) Int. Cl.: B25J 21/02

(54) **GLOVEBOX-VORRICHTUNG UND DEREN ANWENDUNG**

(30) Priorität: 25.06.2020 DE 102020116817
(71) Anmelder: M. Braun Inertgas-Systeme GmbH, 85748 Garching (DE)
(72) Erfinder: HOLZMANN, Christian, 85748 Garching (DE); BIEGER, Patrick, 85748 Garching (DE); DEZSI, Judit, 85748 Garching (DE)
(74) Vertreter: v. Bezold & Partner Patentanwälte - PartG mbB

(57) **Zusammenfassung**

Eine Glovebox-Vorrichtung 100, die für manuelle Tätigkeiten in einem vorbestimmten Arbeitsgas konfiguriert ist, umfasst einen Behälter 10 mit einem Behälterboden 11, einem Behälterdeckel 12 und einer Behälterwand 13, die einen Innenraum 14 zur Aufnahme des Arbeitsgases einschließen, wobei der Innenraum 14 sich entlang einer vertikalen Axialrichtung z erstreckt, eine Mehrzahl von Handschuheinrichtungen 20 jeweils mit einem Paar von gasdichten, flexiblen Handschuhen 21, die gasdicht mit der Behälterwand 13 verbunden und für einen Eingriff in den Innenraum 14 entlang einer radialen Zugriffsrichtung r senkrecht zu der Axialrichtung z des Innenraums 14 angeordnet sind, eine Gasleitungseinrichtung 30, die zur Zufuhr und Abfuhr des Arbeitsgases in den Innenraum 14 angeordnet ist, und eine Schleuseneinrichtung 40, mit der Gegenstände zwischen dem Innenraum 14 und einer Umgebung der Glovebox-Vorrichtung 100 transportierbar sind, wobei die Behälterwand 13 eine umlaufend gekrümmte Form hat und die Handschuheinrichtungen 20 an der Behälterwand 13 für Eingriffe in den Innenraum 14 derart angeordnet sind, dass die radialen Zugriffsrichtungen r von mindestens zwei der Handschuheinrichtungen 20 voneinander abweichen. Es werden auch Verfahren zur Verwendung und Anwendungen der Glovebox-Vorrichtung 100 beschrieben.

## Beschreibung

Die Erfindung betrifft eine Glovebox-Vorrichtung, insbesondere eine Glovebox-Vorrichtung mit mehreren Arbeitsplätzen. Des Weiteren betrifft die Erfindung Verfahren zur Verwendung der Glovebox-Vorrichtung. Anwendungen der Erfindung sind z. B. beim Betrieb von Laboren oder Produktionsanlagen, insbesondere bei der Durchführung chemischer, biologischer, physikalischer, mechanischer und/oder medizinischer Verfahren, gegeben.

Es ist allgemein bekannt, für die manuelle Bearbeitung einer Probe unter Inertgas oder einem vorgegeben Arbeitsgas, zum Beispiel in einem Labor oder an einer Produktionsanlage, eine Glovebox zu verwenden. Eine herkömmliche, aus der Praxis bekannte Glovebox besteht typischerweise aus einem im Wesentlichen quaderförmigen, gasdichten Behälter, in dem z. B. ein Inertgas zirkuliert und in dessen Innenraum mit mindestens einem Paar von gasdicht an einer Behälterwand angebrachten Handschuhen zugegriffen werden kann. Der Behälter umfasst z. B. einen quaderförmigen Rahmen, an dem transparente, ebene Behälterwände fixiert sind. Der Behälter ist mit einer Eingangs- und einer Ausgangsschleuse ausgestattet, durch die eine Probe in den Behälter eingeführt und aus dem Behälter entnommen werden kann.

Es sind zahlreiche Bauformen von Gloveboxen bekannt, bei denen die Größe und Gestaltung der Glovebox in Abhängigkeit von deren konkreter Anwendung gewählt sind. Beispielsweise sind für die Anwendung im Labor Konfigurationen bekannt, bei denen zur Bereitstellung von mehreren Arbeitsplätzen zwei oder mehr Paare von Handschuhen vorgesehen sind. Dabei sind die Handschuhe für den Zugriff auf den Innenraum des Behälters typischerweise an entgegengesetzten Seiten des Behälters angeordnet.

Herkömmliche Gloveboxen können eine Reihe von Nachteilen haben, die sich auf die Herstellungs- und die Betriebskosten der Gloveboxen und die Nutzungsbedingungen auswirken. Beispielsweise haben herkömmliche Gloveboxen eine komplexe Konfiguration mit einem relativ hohen Gewicht und ein relativ großes Volumen, woraus sich ein aufwendiger Aufbau, ein großer Platzbedarf, zum Beispiel im Labor, und ein großes Gasvolumen ergeben. Mit einem zunehmenden Gasvolumen in der Glovebox steigen auch die Kosten des Inertgases und der Aufwand bei der Reinigung des Inertgases. Ein weiteres Problem besteht in der beschränkten Flexibilität bei der Anpassung der Glovebox an die Raumbedingungen in einem Labor. Typischerweise muss eine herkömmliche Glovebox für einen Transport innerhalb des Labors oder durch eine Tür in ein benachbartes Labor zumindest teilweise durch Fachleute demontiert und anschließend wieder aufgebaut werden.

Schließlich zeichnen sich herkömmliche Gloveboxen mit mehreren Arbeitsplätzen an den entgegengesetzten Seiten des Behälters durch eine erschwerte Zusammenarbeit und sprachliche Kommunikation zwischen den Nutzern der Glovebox aus. Unter den Umgebungsgeräuschen in einem Labor müssen die Nutzer gegebenenfalls mit erhöhter Lautstärke sprechen, was anstrengend und störend für weitere Personen im Labor ist. Des Weiteren ist typischerweise ein simultanes manuelles Arbeiten an einer gemeinsamen Probe von den entgegengesetzten Seiten her erschwert oder ausgeschlossen. Diese Probleme wirken sich insbesondere bei der Anwendung von Gloveboxen in einem Labor einer Ausbildungseinrichtung, wie zum Beispiel einer Universität oder einer Berufsschule, aus.

Die Aufgabe der Erfindung ist es, eine verbesserte Glovebox-Vorrichtung und verbesserte Verfahren zur Anwendung einer Glovebox-Vorrichtung bereitzustellen, mit denen Nachteile herkömmlicher Techniken vermieden werden. Die Glovebox-Vorrichtung soll insbesondere verringerte Herstellungs- und/oder Betriebskosten, eine vereinfachte Konfiguration, ein verringertes Gewicht, einen verringerten Inert- oder Schutzgasverbrauch, einen leichten Auf- oder Umbau, einen vereinfachten Transport und/oder eine vereinfachte Bedienung ermöglichen.

Diese Aufgabe wird durch eine Glovebox-Vorrichtung und ein Verfahren zum Betrieb einer Glovebox-Vorrichtung gelöst, welche die Merkmale der unabhängigen Ansprüche aufweisen. Bevorzugte Ausführungsformen und Anwendungen der Erfindung ergeben sich aus den abhängigen Ansprüchen.

Gemäß einem ersten allgemeinen Gesichtspunkt der Erfindung wird die obige Aufgabe durch eine Glovebox-Vorrichtung gelöst, die für manuelle Tätigkeiten in einem vorbestimmten Arbeitsgas (insbesondere Inertgas und/oder Schutzgas) konfiguriert ist und auch als Handschuhbox- oder Isolator-Vorrichtung bezeichnet werden kann.

Die Glovebox-Vorrichtung umfasst einen Behälter, der auch als Haube bezeichnet werden kann, mit einem Behälterboden, einem Behälterdeckel und einer Behälterwand, die einen Innenraum zur Aufnahme des Arbeitsgases einschließen, wobei der Innenraum sich entlang einer vertikalen Axialrichtung erstreckt.

Die Glovebox-Vorrichtung umfasst des Weiteren eine Mehrzahl von Handschuheinrichtungen jeweils mit einem Paar von gasdichten, flexiblen Handschuhen, die gasdicht mit der Behälterwand verbunden und für einen Eingriff in den Innenraum entlang einer radialen Zugriffsrichtung senkrecht zu der Axialrichtung des Innenraums angeordnet sind. Als Zugriffsrichtung der Handschuheinrichtungen wird jeweils der Verlauf einer Mittelachse jedes Paares von Handschuhen in einer Ebene senkrecht zur Axialrichtung bezeichnet. Die Zugriffsrichtung charakterisiert die Position der Handschuheinrichtung an der Behälterwand. Aufgrund der Flexibilität der Handschuhe und der Form von Handschuhdurchführungen durch die Behälterwand ist bei dem manuellen Gebrauch der Handschuhe eine von der Zugriffrichtung abweichende und aus der Ebene senkrecht zur Axialrichtung herausführende Bewegung der Hände eines Nutzers möglich.

Jeder Handschuheinrichtung ist eine Arbeitsstation im Innenraum des Behälters zugeordnet. Eine Arbeitsstation ist ein Bereich, der durch die Handschuhe von mindestens einer der Handschuheinrichtungen erreichbar ist und in dem eine Bearbeitung eines Gegenstands erfolgt. An der Arbeitsstation oder zwischen den Arbeitsstationen sind optional Gefäße und/oder Bearbeitungswerkzeuge vorgesehen. Die Glovebox-Vorrichtung ist vorzugsweise so dimensioniert, dass sich die Bereiche der Arbeitsstationen teilweise überlappen.

Die Handschuheinrichtungen sitzen in Handschuhdurchführungen der Behälterwand, die vorzugsweise eine kreisrunde oder ovale Form haben. Ovale Handschuhdurchführungen sind vorzugsweise mit einer langen Achse in vertikaler Richtung gebildet, so dass vorteilhafterweise die Bewegungsfreiheit durch den Nutzer in Richtungen parallel zur vertikalen Axialrichtung vergrößert wird. Jeder Handschuh umfasst einen Handabschnitt und einen Unterarmabschnitt. Die Länge der Handschuhe ist vorzugsweise so gewählt, dass der Handabschnitt bis zur Mitte des Behälters oder über die Mitte hinausreicht.

Eine Gasleitungseinrichtung, die zur Zufuhr und Abfuhr des Arbeitsgases in den Innenraum angeordnet ist, und eine Schleuseneinrichtung, mit der Gegenstände zwischen dem Innenraum und einer Umgebung der Glovebox-Vorrichtung transportierbar sind, sind weitere Komponenten der Glovebox-Vorrichtung. Die Gasleitungseinrichtung ist für eine Umwälzung des Arbeitsgases im Behälter konfiguriert und mit einem Zulauf zum Innenraum und einem Rücklauf vom Innenraum und einer Umwälzverrohrung ausgestattet.

Optional kann zur Umwälzung eine laminare Strömung des Arbeitsgases im Behälter und eine Rückströmung in der Umwälzverrohrung vorgesehen sein. Die laminare Strömung wird vorzugsweise durch die Gestaltung des Behälterdeckels als flache, mit einer zum Innenraum durch eine gasdurchlässige Trennwand abgegrenzte Kammer bewirkt, die einen Gasverteiler bildet.

Gemäß der Erfindung hat die Behälterwand eine umlaufend gekrümmte Form, insbesondere eine Form, die in Umfangsrichtung relativ zur vertikalen Axialrichtung zumindest abschnittsweise, vorzugsweise vollständig umlaufend, gekrümmt ist. Die Behälterwand hat besonders bevorzugt keine Stufen oder Kanten, die parallel zur Axialrichtung verlaufen. Der Erfinder hat festgestellt, dass Nachteile herkömmlicher Gloveboxen überwunden werden können, indem abweichend von deren typischer Quaderform mit ebenen Behälterwänden die gekrümmte Form der Behälterwand vorgesehen ist. Die gekrümmte Form der Behälterwand ermöglicht vorteilhafterweise bei vorgegebenen Innendimensionen des Behälters eine Minimierung des Innenraumvolumens und damit eine Verringerung des Arbeitsgasverbrauchs bzw. des Aufwands bei der Reinigung des Arbeitsgases. Zugleich kann der Behälter kompakter als mit der herkömmlichen Quaderform aufgebaut und damit einfacher und platzsparend am Anwendungsort aufstellbar und/oder transportierbar sein. Vorzugsweise hat der Behälter ein Volumen des Innenraums, das kleiner oder gleich 2 m³, besonders bevorzugt kleiner oder gleich 1 m³ ist.

Des Weiteren ermöglicht die gekrümmte Form der Behälterwand, die Zahl von Rahmenteilen zur Halterung der Behälterwand zu reduzieren oder sogar Rahmenteile komplett zu vermeiden, wodurch eine Gewichtsreduzierung erzielt wird. Durch die Vermeidung von Rahmenteilen wird im Vergleich zu herkömmlichen Gloveboxen weniger Edelstahl benötigt, wodurch eine Kosten- und Gewichtsersparnis erzielt wird.

Weiterhin sind gemäß der Erfindung die Handschuheinrichtungen an der Behälterwand für Eingriffe in den Innenraum derart angeordnet, dass die radialen Zugriffsrichtungen von mindestens zwei der Handschuheinrichtungen voneinander abweichen. Mit anderen Worten, die Zugriffsrichtungen von mindestens zwei der Handschuheinrichtungen schließen einen Winkel kleiner als 180° ein bzw. mindestens zwei der Handschuheinrichtungen sind nicht einander gegenüberliegend auf entgegengesetzten Seiten des Behälters angeordnet. Vorteilhaftweise vereinfacht die erfindungsgemäße Anordnung der Handschuheinrichtungen, die durch die gekrümmte Form der Behälterwand vereinfacht wird, die Zusammenarbeit und Kommunikation von Nutzern der Glovebox-Vorrichtung. Beispielsweise können Proben bequem von einem Nutzer zu einem weiteren Nutzer weitergereicht werden. Des Weiteren können mehrere Arbeitsplätze bei einem vergleichbar kleinen Volumen des Innenraums bereitgestellt werden.

Vorteilhafterweise hat die Glovebox-Vorrichtung einen vereinfachten und kompakten Aufbau, der eine einfache Endmontage durch den Anwender und einen Transport insbesondere durch eine Personen-Labortür erlaubt.

Gemäß einem zweiten allgemeinen Gesichtspunkt der Erfindung wird die obige Aufgabe durch ein Verfahren zur Verwendung einer Glovebox-Vorrichtung gemäß dem ersten allgemeinen Gesichtspunkt der Erfindung oder einer ihrer Ausführungsformen gelöst, wobei die Schritte Bereitstellung von zu bearbeitenden Gegenständen (insbesondere Proben und/oder Werkstücke) im Innenraum des Behälters, manuelle Handhabung der Gegenstände durch mindestens einen Nutzer der Glovebox-Vorrichtung und Entnahme der Gegenstände aus der Glovebox-Vorrichtung vorgesehen sind und wobei in der Glovebox-Vorrichtung eine kontrollierte Atmosphäre des Arbeitsgases geschaffen wird. Vorteilhafterweise umfasst das Verfahren eine Bearbeitung der Gegenstände in einem durch die Glovebox-Vorrichtung gebildeten und von der Umgebung abgegrenzten hermetisch, gasdicht abgeschlossenen Raum. Bevorzugte Anwendungen der Glovebox-Vorrichtung bestehen als Laborgerät, als Reinraumeinrichtung, als mobiles Arbeitsgerät, bei der Handhabung biologischer und/oder chemischer Proben, und/oder bei der Durchführung chemischer, biologischer, physikalischer und/oder medizinischer Verfahren.

Gemäß einer bevorzugten Ausführungsform der Erfindung hat die Behälterwand eine Zylinderform, wobei die radialen Zugriffsrichtungen von mindestens zwei der Handschuheinrichtungen um mindestens 60° und weniger als 180 ° voneinander abweichen. Der Behälter bildet einen Hohlzylinder, dessen Zylinderachse mit der vertikalen Axialrichtung zusammenfällt. Vorteilhafterweise erlaubt die Zylinderform eine besonders deutliche Verringerung des Volumens des Innenraums bei vorgegebenen Querschnittsmaßen. Des Weiteren begünstigt die Zylinderform eine gleichmäßige Zirkulationsströmung des Arbeitsgases an allen Arbeitsstationen. Der Begriff "Zylinderform" schließt Zylinder mit verschiedenen Querschnittsflächen, insbesondere Kreiszylinder oder elliptische Zylinder, und auch Behälterformen, die sich in vertikaler Richtung geringfügig verjüngen, ein.

Besonders bevorzugt ist die Zahl der Handschuheinrichtungen im Bereich von 2 bis 4 gewählt ist. Es sind vorzugsweise mindestens zwei Paare von Handschuhen vorgesehen, so dass vorteilhaftweise mindestens zwei Nutzer gleichzeitig an der Glovebox-Vorrichtung arbeiten können oder ein Nutzer mehrere Arbeitsstationen in der Glovebox-Vorrichtung nutzen kann. Es sind vorzugsweise höchstens vier Paare von Handschuhen vorgesehen, da bis zu dieser Anzahl vorteilhafterweise eine behinderungsfreie Arbeit von mehreren Nutzern begünstigt wird.

Wenn gemäß einer weiteren, bevorzugten Variante drei Handschuheinrichtungen vorgesehen sind, deren radialen Zugriffsrichtungen jeweils um 120° voneinander abweichen, wird vorteilhafterweise eine gleichmäßige Verteilung der Arbeitsplätze um den Umfang der Glovebox-Vorrichtung bereitgestellt.

Gemäß einer weiteren vorteilhaften Ausführungsform der Erfindung weist die Glovebox-Vorrichtung eine Ablageeinrichtung auf, die zur Aufnahme von Gegenständen in der Mitte des Behälters angeordnet ist und einen Zugriff mittels allen Handschuheinrichtungen erlaubt. Die Ablageeinrichtung umfasst vorzugsweise eine Plattform (Tisch), auf der die Gegenstände, wie z. B. Proben oder Werkstücke, positionierbar sind. Besonders bevorzugt umfasst die Ablageeinrichtung einen Drehteller, dessen Drehachse parallel zu der vertikalen Axialrichtung des Innenraums verläuft, z. B. mit der vertikalen Axialrichtung zusammenfällt. Der Drehteller bildet eine drehbare Plattform, die vorteilhafterweise eine Bewegung von Gegenständen, insbesondere ein Weiterreichen größerer Objekte, vereinfacht.

Gemäß einer weiteren bevorzugten Ausführungsform der Erfindung ist die Behälterwand aus einem transparenten, vorzugsweise glasklaren Material gebildet. Vorteilhafterweise wird damit die Sichtbarkeit des Innenraums verbessert. Besonders bevorzugt ist die Behälterwand für eine allseitige Sichtbarkeit des Innenraums eingerichtet. Die Behälterwand ist flächig durchsichtig hergestellt, wobei jedoch in der Behälterwand Streben oder andere Bauteile enthalten sein können, welche die allseitige Sichtbarkeit des Innenraums nicht oder nur vernachlässigbar beeinträchtigen. Wenn die Behälterwand aus einem Kunststoff, wie z. B. Polymethylmethacrylat (PMMA) oder Polycarbonat (PC), gebildet ist, ergeben sich weitere Vorteile durch eine Gewichtsminimierung der Glovebox-Vorrichtung.

Vorteilhafterweise ist die Glovebox-Vorrichtung mit einem Sockelbereich ausgestattet, der den Behälter trägt und in dem eine Gasreinigungseinrichtung angeordnet ist. Die Gasleitungseinrichtung ist Teil der Gasleitungseinrichtung. Diese Ausführungsform der Erfindung hat den Vorteil, dass der Sockelbereich alle Teile der Glovebox-Vorrichtung aufnehmen kann, die nicht im Innenraum des Behälters benötigt werden. Peripheriegeräte außerhalb der Vorrichtung werden vermieden, und eine Schalldämmung wird vereinfacht. Des Weiteren hat der Sockelbereich Vorteile für die Realisierung von möglichst kurzen Rohrleitungen der Gasleitungseinrichtung und für eine vereinfachte Umsetzbarkeit, z. B. innerhalb eines Labors oder innerhalb eines Gebäudes.

Bei einer weiteren vorteilhaften Variante der Erfindung ist die Glovebox-Vorrichtung mit mindestens einer Gasleitung ausgestattet, die vom Sockelbereich zum Behälterdeckel in Axialrichtung verläuft und für eine Gaszufuhr vom Behälterdeckel in den Innenraum und/oder Gasabfuhr vom Innenraum zum Behälterdeckel angeordnet ist. Die mindestens eine Gasleitung mündet im Behälterdeckel oder an diesen angrenzend, so dass vorteilhafterweise eine vertikale, nach oben oder unten gerichtete, Umwälzströmung im Behälter erzeugt werden kann. Es können z. B. zwei Gasleitungen vorgesehen sein, die jeweils einen Zulauf oder einen Rücklauf von Arbeitsgas bilden. Die mindestens eine Gasleitung erfüllt vorteilhafterweise mehrere Funktionen. Neben dem Gastransport bildet die Gasleitung eine Stütze für den Behälterdeckel und für die Ablageeinrichtung.

Besonders bevorzugt weist der Behälterboden Öffnungen auf, über die der Innenraum mit dem Sockelbereich verbunden ist. Die Öffnungen im Behälterboden leiten die Umwälzströmung durch. Durch den Behälterboden wird Gasverteiler der Gasleitungseinrichtung gebildet, mit dem Arbeitsgas unter einem Überdruck zu den Öffnungen geleitet oder mittels eines Unterdrucks von den Öffnungen gesammelt wird.

Vorteilhafterweise bestehen die folgenden verschiedenen Varianten bei der Gestaltung des Sockelbereichs, die einzeln oder in Kombination vorgesehen sein können. Gemäß einer ersten Variante kann eine Oberseite des Sockelbereichs den Behälterboden bilden. Vorteilhafterweise wird dadurch der Aufbau der Glovebox-Vorrichtung vereinfacht. Alternativ oder zusätzlich kann der Sockelbereich höhenverstellbar sein. Der Sockelbereich kann z. B. zwei Sockelteile umfassen, die ineinandergreifen und ein teleskopartiges Ausziehen des Sockelbereichs ermöglichen. Alternativ oder zusätzlich kann der Sockelbereich mit Rollen ausgestattet sein, wodurch vorteilhafterweise die Beweglichkeit der Glovebox-Vorrichtung erleichtert wird. Gemäß einer weiteren Variante kann der Sockelbereich eine Kühleinrichtung (Temperierungseinrichtung) enthalten. Mit der Kühleinrichtung ist vorteilhafterweise der Behälterboden, die Ablageeinrichtung, die Schleuseneinrichtung und/oder das Arbeitsgas temperierbar. Vorzugsweise ist die Kühleinrichtung für eine Temperierung im Bereich von 5 °C bis 40 °C ausgelegt. Alternativ oder zusätzlich enthält die Gasreinigungseinrichtung im Sockelbereich einen Gasfilter. Der Gasfilter enthält ein Filtermaterial, das vom Arbeitsgas bei der Umwälzung im Behälter durchströmt wird und z. B. Staubpartikel auffängt. Alternativ oder zusätzlich wird in der Glovebox-Vorrichtung ein geschlossener Gaskreislauf zwischen dem Innenraum und dem Sockelbereich geschaffen. Vorteilhafterweise wird dadurch ein autarker Betrieb der Glovebox-Vorrichtung ermöglicht. Zur Kompensation von Gasverlusten durch die Schleuseneinrichtung oder Undichtheiten des Behälters oder der Handschuheinrichtungen kann im Sockelbereich ein Arbeitsgasreservoir, wie z. B. eine Druckflasche, mit dem Arbeitsgas angeordnet und mit der Gasleitungseinrichtung verbunden sein.

Gemäß einer weiteren, besonders bevorzugten Ausführungsform der Erfindung sind der Behälterboden und der Behälterdeckel als Gasverteiler zur Erzeugung einer laminaren Strömung eines Arbeitsgases im Innenraum gebildet. Hierzu weisen der Behälterboden und die Trennwand des als Kammer gebildeten Behälterdeckels jeweils eine Verteilung von Öffnungen auf, durch die das Arbeitsgas strömt.

Weitere Vorteile der Glovebox-Vorrichtung ergeben sich aus der Gestaltung der Schleuseneinrichtung. Vorzugsweise umfasst die Schleuseneinrichtung umfasst eine Schleuse, die zum Einführen und zum Ausführen von Gegenständen in den und aus dem Behälter angeordnet ist. Die Schleuse hat eine Doppelfunktion, die z. B. durch einen beweglichen Schleusenbehälter, wie z. B. eine Schublade oder ein Korb und zwei Schleusenklappen realisiert wird, die sich jeweils in die Umgebung der Glovebox-Vorrichtung oder in den Innenraum des Behälters öffnen. Vorteilhafterweise wird eine gesonderte Ausgangsschleuse zusätzlich zu einer Eingangsschleuse vermieden.

Besonders bevorzugt ist eine einzige Schleuse vorgesehen, wodurch der Aufbau der Glovebox-Vorrichtung erheblich vereinfacht wird. Eine einzige Schleuse ist insbesondere bei einem umlaufenden Betrieb der Glovebox-Vorrichtung vorgesehen, bei der eine Probe eingeschleust, an mehreren Arbeitsstationen aufeinanderfolgend bearbeitet und anschließend ausgeschleust wird. Vorteilhafterweise kann die Schleuseneinrichtung im Behälterboden und/oder der Behälterwand angeordnet sein. Die Anordnung der Schleuseneinrichtung im Behälterboden wird bevorzugt, da im Behälterboden die Montage und Dichtung der Schleusenklappe, die sich in den Innenraum öffnet, vereinfacht wird.

Die Schleuseneinrichtung ist vorzugsweise in Umfangsrichtung zwischen zwei Arbeitsstationen bzw. zwischen zwei Handschuheinrichtungen angeordnet, so dass vorteilhafterweise beidseitig auf die Schleuseneinrichtung zugegriffen werden kann.

Weitere Einzelheiten und Vorteile der Erfindung werden im Folgenden unter Bezug auf die beigefügten Zeichnungen beschrieben. Die Zeichnungen zeigen in:
- Figur 1:: eine schematische, teilweise geschnittene Perspektivansicht einer bevorzugten Ausführungsform der erfindungsgemäßen Glovebox-Vorrichtung; und
- Figur 2:: eine schematische Illustration eines Behälterdeckels einer abgewandelten Ausführungsform der erfindungsgemäßen Glovebox-Vorrichtung.

Merkmale von Ausführungsformen der Erfindung werden im Folgenden beispielhaft unter Bezug auf eine Glovebox-Vorrichtung mit einer Zylinderform sowohl des Behälters als auch des Sockelbereichs mit im Wesentlichen gleichen Durchmessern beschrieben. Es wird betont, dass die Anwendung der Erfindung nicht auf dieses Beispiel beschränkt, sondern entsprechend bei einer Glovebox-Vorrichtung insbesondere mit anderen Formen, Materialien und/oder Dimensionen möglich ist. Einzelheiten des Betriebs einer Glovebox-Vorrichtung werden nicht beschrieben, da diese an sich aus dem Stand der Technik bekannt sind.

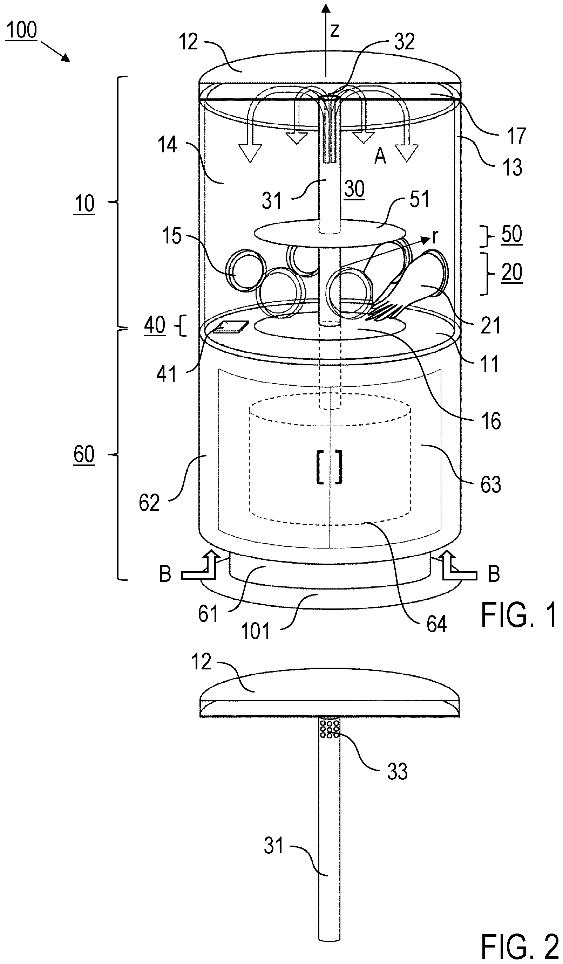

Figur 1 zeigt in schematischer, teilweise geschnittene Perspektivansicht die Glovebox-Vorrichtung 100 mit dem Behälter 10, den Handschuheinrichtungen 20, der Gasleitungseinrichtung 30, der Schleuseneinrichtung 40, der Ablageeinrichtung 50 und dem Sockelbereich 60. Zusätzlich kann eine Steuereinrichtung (nicht dargestellt), insbesondere ein Steuercomputer, vorgesehen sein, mit der zum Beispiel die Gasleitungseinrichtung 30 und/oder die Schleuseneinrichtung 40 steuerbar sind. Die Glovebox-Vorrichtung 100 steht aufrecht auf dem horizontalen Boden 101, z. B. eines Labors, wobei die vertikale Axialrichtung z des Behälters senkrecht zur Horizontalen verläuft.

Der Behälter 10 wird durch den Behälterboden 11 den Behälterdeckel 12 und die Behälterwand 13 gebildet, die den Innenraum 14 einschließen. Der Behälterboden 11 und der Behälterdeckel 12 sind z. B. aus Metall, z. B. Edelstahl, oder einem Kunststoff hergestellt. Der Durchmesser des Behälters 10 ist z. B. im Bereich 120 cm bis 140 cm gewählt, während die Höhe des Behälters 10 z. B. 80 cm beträgt.

Der Behälterboden 11 ist zugleich ein oberer Wandabschnitt des Sockelbereichs 60. Im Behälterboden 11 sind mittig um die Gasleitungseinrichtung 50 eine Arbeitsfläche 16 und eine sich zum Innenraum 14 öffnende Schleusenklappe 41 vorgesehen. Des Weiteren enthält der Behälterboden 11, einschließlich der Arbeitsfläche 16, mindestens eine Öffnung (nicht dargestellt), vorzugsweise als Gasverteiler eine Vielzahl von Öffnungen zur Abfuhr (oder Zufuhr) von Arbeitsgas aus dem Innenraum 14.

Der Behälterdeckel 12 hat die Gestalt einer flachen Kammer, die auf Seiten des Innenraums 14 durch eine gasdurchlässige Trennwand 17 begrenzt wird. Eine Gasleitung 31 der Gasleitungseinrichtung 30 ist mit der Trennwand 17 verbunden und mündet an der Innenseite des Behälterdeckels 12. Der Behälterdeckel 12 mit der Trennwand 17 bildet einen Gasverteiler, der für die Erzeugung einer laminaren Strömung des Arbeitsgases im Innenraum 14 von Vorteil ist.

Die Behälterwand 13 hat eine umlaufend gekrümmte Form, z. B. in Gestalt eines Kreiszylinders, und sie ist z. B. aus PMMA hergestellt. In der Behälterwand 13 sind drei Handschuheinrichtungen 20 jeweils mit einem Paar von Handschuhen 21 angeordnet. Zur besseren Übersichtlichkeit ist nur ein Paar von Handschuhen 21 gezeigt. Die Behälterwand 13 enthält Öffnungen, die Handschuhdurchführungen 15 bilden, in denen die Handschuhe 21 gasdicht befestigt sind. Die Handschuhdurchführungen 15 sind kreisrund oder oval.

Die Behälterwand 13 weist an ihrer unteren Kante einen umlaufenden Flansch auf, der auf dem Sockelbereich 60 sitzt. Die Behälterwand 13 ist über den Flansch mit dem Sockelbereich 60 verbunden. Der Flansch bietet Vorteile durch die Schaffung einer ebenen Dichtungsfläche zwischen der Behälterwand 13 und dem Sockelbereich 60 und durch die einfache Demontierbarkeit von Behälter 10 und Sockelbereich 60. Alternativ oder zusätzlich kann auch die obere Kante der Behälterwand 13 mit einem umlaufenden Flansch zur Verbindung mit dem Behälterdeckel 12 ausgestattet sein.

Die Handschuheinrichtungen 20 sind in einer gemeinsamen Ebene senkrecht zur vertikalen Axialrichtung z unterhalb der Ablageeinrichtung 50 und oberhalb des Behälterbodens 11 angeordnet, könnten jedoch bei Bedarf auch in verschiedenen Höhen über dem Behälterboden 11 positioniert sein. Die Handschuhe 21 sind jeweils aus einem flexiblen Kunststoff oder Gummi mit einem Handabschnitt und einem Unterarmabschnitt hergestellt, wie es an sich von herkömmlichen Gloveboxen bekannt ist. Die Länge der Handschuhe 21 ist so gewählt, dass ein Nutzer sowohl auf der Arbeitsfläche 16 auf dem Behälterboden 11 als auch auf der Ablageeinrichtung 50 arbeiten kann. Der Zugriffbereich einer Handschuheinrichtung bildet jeweils eine Arbeitsstation. Die Position jeder der Handschuheinrichtungen 20 definiert eine radiale Zugriffsrichtung r, welche der Mittelachse zwischen den Handschuhen 21 der Handschuheinrichtung 20 senkrecht zur vertikalen Axialrichtung z entspricht. Im dargestellten Beispiel sind die radialen Zugriffsrichtung r der Paare von Handschuhe 21 jeweils um 120 ° versetzt angeordnet.

Die Gasleitungseinrichtung 30 umfasst die vorzugsweise mittig angeordnete Gasleitung 31 zur Zufuhr (oder Abfuhr) des Arbeitsgases, z. B. Stickstoff oder ein Edelgas, in den (oder aus dem) Innenraum 14, die mit einem Arbeitsgasreservoir (nicht dargestellt), einer Pumpeinrichtung (nicht dargestellt) und der Gasreinigungseinrichtung 64 im Sockelbereich 60 gekoppelt ist. Das Arbeitsgasreservoir kann im Sockelbereich 60 oder außerhalb von diesem mit einer Leitungsverbindung zur Gasleitungseinrichtung 30 angeordnet sein. Bei Betrieb der Pumpeinrichtung wird mit der Gasleitungseinrichtung 30 eine Umwälzung des Arbeitsgases im Behälter 10 mit einer laufenden Reinigung des Arbeitsgases bewirkt.

Die Gasleitung 31 umfasst ein starres Rohr, z. B. aus Kunststoff oder Metall, das einen Träger für die Ablageeinrichtung 50 bildet und an seinem oberen Ende mit der Trennwand 17 verbunden ist, so dass der Behälterdeckel 12 mittig gestützt wird. Die Ablageeinrichtung 50 umfasst z. B. einen Drehteller 51, der über ein Drehgelenk mit der Gasleitung 31 verbunden ist.

Das obere Mündungsende 32 der Gasleitung 31 bildet eine Zufuhr (oder Abfuhr) von Arbeitsgas in den Behälterdeckel 12 und über die Trennwand 17 in den Innenraum 14. Austretendes Arbeitsgas wird mittels des Behälterdeckels 12 durch die Trennwand 17 zum Innenraum 14 umgeleitet (siehe Pfeile A). Zur Bildung einer möglichst wirbelfreien Strömung des Arbeitsgases ist die Trennwand 17 über die Querschnittsfläche des Behälters 10 hinweg mit einer Verteilung von Öffnungen (nicht dargestellt) versehen. Bei einer abgewandelten Ausführungsform, die in Figur 2 illustriert ist, ist die Gasleitung 31 an ihrem oberen Ende mit seitlichen Bohrungen 33 ausgestattet, welche die Zufuhr (oder Abfuhr) des Arbeitsgases in den (oder aus dem) Innenraum 14 bilden.

Der Sockelbereich 60 umfasst bei der dargestellten Ausführungsform mit Höhenverstellung der Glovebox-Vorrichtung 100 ein unteres Sockelteil 61 und ein oberes Sockelteil 62 mit Türen 63. Das untere Sockelteil 61 bildet eine ortsfeste Basis der Glovebox-Vorrichtung 100 und das obere Sockelteil 62 ist relativ zum dem unteren Sockelteil 61 parallel zur vertikalen Axialrichtung z verschiebbar. Es kann z. B. eine Verschiebung und lösbare Fixierung entlang von inneren Führungen im Sockelbereich 60 vorgesehen sein. Die Verschiebung kann manuell oder mit einem elektrischen Motorantrieb erfolgen. Das untere Sockelteil 61 trägt die im Sockelbereich 60 vorgesehenen Peripheriegeräte, wie z. B. die Gasreinigungseinrichtung 64, die Pumpeinrichtung und optional das Arbeitsgasreservoir. Das obere Sockelteil 62 stellt ein Gehäuse für die Peripheriegeräte bereit und bildet den Behälterboden 11. Der Durchmesser des oberen Sockelteils 62 ist gleich dem Durchmesser des Behälters 10, und die Höhe des Sockelbereichs 60 beträgt z. B. 80 cm. Der Durchmesser des unteren Sockelteils 61 ist geringer als der Durchmesser des oberen Sockelteils 62, so dass ein umlaufender Schlitz für eine Luftzufuhr für Kühlungszwecke (siehe Pfeile B) gebildet wird. Alternativ kann die Luftzufuhr für Kühlungszwecke durch Öffnungen, wie z. B. Lüftungsschlitze, im oberen Sockelteil 62 erfolgen.

Die Schleuseneinrichtung 40 ist mit dem oberen Sockelteil 62 verbunden und als L-förmige Schleuse gebildet. Auf einen Korb (nicht dargestellt) der Schleuseneinrichtung 40 kann über eine erste Schleusenklappe (nicht dargestellt), die sich vom Sockelbereich 60 in die Umgebung der Glovebox-Vorrichtung öffnet, oder über eine zweite Schleusenklappe 41 zugegriffen werden, die sich in den Innenraum 14 des Behälters 10 öffnet.

Bei einer abgewandelten Ausführungsform kann der Durchmesser des Sockelbereichs 60, insbesondere des oberen Sockelteils 62, kleiner als der Durchmesser des Behälters 10 sein, wodurch ein Sitzen der Nutzer an der Glovebox-Vorrichtung erleichtert wird.

Bei einer weiteren abgewandelten Ausführungsform ohne Höhenverstellung der Glovebox-Vorrichtung 100 kann der Sockelbereich 60 einteilig gebildet sein. In diesem Fall weist der Sockelbereich ein Gehäuse auf, das im Wesentlichen wie das obere Sockelteil 62 gebildet ist und auf dem Boden 101 steht. Zur Kühlluft-Zufuhr können im oberen Sockelteil 62 Öffnungen vorgesehen sein.

Bei einer weiteren abgewandelten Ausführungsform können im Behälterboden 11 Lagerbehälter (nicht dargestellt) vorgesehen sein. Die Lagerbehälter sind für die Aufnahme oder die Entnahme von Gegenständen vom Innenraum 14 her angeordnet. Vorzugsweise sind die Lagerbehälter temperierbar, insbesondere heizbar und/oder kühlbar. Mindestens ein Lagerbehälter ist vorzugsweise in Umfangsrichtung zwischen zwei Arbeitsstationen bzw. zwischen zwei Handschuheinrichtungen angeordnet, so dass vorteilhafterweise beidseitig auf den Lagerbehälter zugegriffen werden kann.

Der Behälter, vorzugsweise der Behälterdeckel 12, kann mit einer Beleuchtungseinrichtung, wie z. B. einer LED-basierten Beleuchtung, insbesondere in Gestalt eines LED-Rings, ausgestattet sein.

Bei Verwendung der Glovebox-Vorrichtung 100 werden die zu bearbeitenden Gegenstände über die Schleuseneinrichtung 40 in den Innenraum 14 des Behälters 10 eingeschleust. Auf der Arbeitsfläche 16 und/oder der Ablageeinrichtung 50 und/oder bei freier manueller Halterung erfolgt eine manuelle Handhabung der Gegenstände durch den oder die Nutzer der Glovebox-Vorrichtung 100, wobei eine kontrollierte Atmosphäre des Arbeitsgases im Innenraum 14 gegeben ist. Anschließend erfolgt die Entnahme der Gegenstände aus der Glovebox-Vorrichtung 100 über die Schleuseneinrichtung 40.

Die in der vorstehenden Beschreibung, den Zeichnungen und den Ansprüchen offenbarten Merkmale der Erfindung können sowohl einzeln als auch in Kombination oder Unterkombination für die Verwirklichung der Erfindung in ihren verschiedenen Ausgestaltungen von Bedeutung sein.

## Patentansprüche

1. Glovebox-Vorrichtung (100), die für manuelle Tätigkeiten in einem vorbestimmten Arbeitsgas konfiguriert ist, umfassend
- einen Behälter (10) mit einem Behälterboden (11), einem Behälterdeckel (12) und einer Behälterwand (13), die einen Innenraum (14) zur Aufnahme des Arbeitsgases einschließen, wobei der Innenraum (14) sich entlang einer vertikalen Axialrichtung (z) erstreckt,
- eine Mehrzahl von Handschuheinrichtungen (20) jeweils mit einem Paar von gasdichten, flexiblen Handschuhen (21), die gasdicht mit der Behälterwand (13) verbunden und für einen Eingriff in den Innenraum (14) entlang einer radialen Zugriffsrichtung (r) senkrecht zu der Axialrichtung (z) des Innenraums (14) angeordnet sind,
- eine Gasleitungseinrichtung (30), die zur Zufuhr und Abfuhr des Arbeitsgases in den Innenraum (14) angeordnet ist, und
- eine Schleuseneinrichtung (40), mit der Gegenstände zwischen dem Innenraum (14) und einer Umgebung der Glovebox-Vorrichtung (100) transportierbar sind,
**dadurch gekennzeichnet, dass**
- die Behälterwand (13) eine umlaufend gekrümmte Form hat, und
- die Handschuheinrichtungen (20) an der Behälterwand (13) für Eingriffe in den Innenraum (14) derart angeordnet sind, dass die radialen Zugriffsrichtungen (r) von mindestens zwei der Handschuheinrichtungen (20) voneinander abweichen.

2. Glovebox-Vorrichtung gemäß Anspruch 1, bei der
- die Behälterwand (13) eine Zylinderform hat und die radialen Zugriffsrichtungen (r) von mindestens zwei der Handschuheinrichtungen (20) um mindestens 60° und weniger als 180 ° voneinander abweichen.

3. Glovebox-Vorrichtung gemäß einem der vorhergehenden Ansprüche, bei der
- die Zahl der Handschuheinrichtungen (20) im Bereich von 2 bis 4 gewählt ist.

4. Glovebox-Vorrichtung gemäß einem der vorhergehenden Ansprüche, bei der
- drei Handschuheinrichtungen (20) vorgesehen sind, deren radialen Zugriffsrichtungen (r) jeweils um 120° voneinander abweichen.

5. Glovebox-Vorrichtung gemäß einem der vorhergehenden Ansprüche, die umfasst
- eine Ablageeinrichtung (50), die zur Aufnahme von Gegenständen in der Mitte des Behälters (10) angeordnet ist und einen Zugriff mittels allen Handschuheinrichtungen (20) erlaubt.

6. Glovebox-Vorrichtung gemäß Anspruch 5, bei der
- die Ablageeinrichtung (50) einen Drehteller (51) umfasst, dessen Drehachse parallel zu der vertikalen Axialrichtung (z) des Innenraums (14) verläuft.

7. Glovebox-Vorrichtung gemäß einem der vorhergehenden Ansprüche, bei der
- die Behälterwand (13) aus einem transparenten Material gebildet ist, und/oder
- die Behälterwand (13) für eine allseitige Sichtbarkeit des Innenraums (14) eingerichtet ist.

8. Glovebox-Vorrichtung gemäß einem der vorhergehenden Ansprüche, die umfasst
- einen Sockelbereich (60), der den Behälter (10) trägt und in dem eine Gasreinigungseinrichtung (64) angeordnet ist.

9. Glovebox-Vorrichtung gemäß Anspruch 8, die umfasst
- eine Gasleitung (31), die vom Sockelbereich (60) zum Behälterdeckel (12) in Axialrichtung (z) verläuft und für eine Gaszufuhr vom Behälterdeckel (12) in den Innenraum (14) und/oder Gasabfuhr vom Innenraum (14) zum Behälterdeckel (12) angeordnet ist.

10. Glovebox-Vorrichtung gemäß Anspruch 9, bei der
- der Behälterboden (11) Öffnungen (15) aufweist, über die der Innenraum (14) mit dem Sockelbereich (60) verbunden ist.

11. Glovebox-Vorrichtung gemäß einem der Ansprüche 8 bis 10, bei der der Sockelbereich (60) mindestens eines der Merkmale umfasst
- eine Oberseite des Sockelbereichs (60) bildet den Behälterboden (11),
- der Sockelbereich (60) ist höhenverstellbar,
- der Sockelbereich (60) ist mit Rollen ausgestattet,
- der Sockelbereich (60) enthält eine Kühleinrichtung,
- die Gasreinigungseinrichtung (64) im Sockelbereich (60) enthält einen Gasfilter, und
- es ist ein geschlossener Gaskreislauf zwischen dem Innenraum (14) und dem Sockelbereich (60) vorgesehen.

12. Glovebox-Vorrichtung gemäß einem der vorhergehenden Ansprüche, bei der
- der Behälterboden (11) und der Behälterdeckel (12) als Gasverteiler zur Erzeugung einer laminaren Strömung eines Arbeitsgases im Innenraum (14) gebildet sind.

13. Glovebox-Vorrichtung gemäß einem der vorhergehenden Ansprüche, mit mindestens einem der Merkmale
- die Schleuseneinrichtung (40) umfasst eine Schleuse (41), die zum Einführen und zum Ausführen von Gegenständen in den und aus dem Behälter (10) angeordnet ist, und
- die Schleuseneinrichtung (40) ist im Behälterboden (11) und/oder der Behälterwand (13) angeordnet.

14. Verfahren zur Verwendung einer Glovebox-Vorrichtung (100) gemäß einem der vorhergehenden Ansprüche, mit den Schritten
- Bereitstellung von zu bearbeitenden Gegenständen im Innenraum (14) des Behälters,
- manuelle Handhabung der Gegenstände durch mindestens einen Nutzer der Glovebox-Vorrichtung (100), und
- Entnahme der Gegenstände aus der Glovebox-Vorrichtung (100), wobei
- in der Glovebox-Vorrichtung (100) eine kontrollierte Atmosphäre des Arbeitsgases geschaffen wird.

15. Anwendung einer Glovebox-Vorrichtung (100) gemäß einem der Ansprüche 1 bis 13,
- als Laborgerät, und/oder
- als Reinraumeinrichtung, und/oder
- als mobiles Arbeitsgerät, und/oder
- bei der Handhabung biologischer und/oder chemischer Proben, und/oder
- bei der Durchführung chemischer, biologischer, physikalischer und/oder medizinischer Verfahren.
